# EUROPÄISCHE PATENTSCHRIFT

(11) **EP 3 092 376 B1**
(45) Veröffentlichungstag und Bekanntmachung des Hinweises auf die Patenterteilung: **26.01.2022**
(21) Anmeldenummer: 14815620.1
(22) Anmeldetag: 10.12.2014
(51) Int. Cl.: F01K 9/00, F01K 11/00, F01K 17/00

(54) **WÄRMEKRAFTANLAGE MIT WÄRMERÜCKGEWINNUNG UND ENERGIEUMWANDLUNGSVERFAHREN MIT EINER SOLCHEN WÄRMEKRAFTANLAGE**
THERMAL POWER PLANT WITH HEAT RECOVERY, AND ENERGY CONVERSION METHOD USING SUCH A THERMAL POWER PLANT
CENTRALE THERMIQUE À RÉCUPÉRATION DE CHALEUR ET PROCÉDÉ DE CONVERSION D'ÉNERGIE AVEC LADITE CENTRALE THERMIQUE

(30) Priorität: 20.12.2013 CH 21152013
(43) Veröffentlichungstag der Anmeldung: 16.11.2016
(73) Patentinhaber: Mächler, Josef, 3006 Bern (CH)
(72) Erfinder: Mächler, Josef, 3006 Bern (CH)
(74) Vertreter: BOVARD AG
(86) Internationale Anmeldenummer: PCT/EP2014/077157
(87) Internationale Veröffentlichungsnummer: WO 2015/091135

(56) Entgegenhaltungen:
- WO-A1-2008/009681
- WO-A1-2014/018654
- DE-A1- 3 327 838
- DE-A1-102010 034 153
- US-A1- 2004 182 082

## Beschreibung

Die Erfindung betrifft das Gebiet von Anlagen zur Erzeugung von mechanischer oder elektrischer Energie aus Wärme, insbesondere von Wärmekraftanlagen mit Wärmerückgewinnung, vor allem Wärmekraftmaschinen, Kolbendampfmaschinen oder Dampfturbinen.

### Stand der Technik

Aus dem Stand der Technik sind verschiedene Dampfkreisprozesse mit einer Rückgewinnung von in den Prozess eingebrachter Energie bekannt. Eine Erzeugung elektrischer Energie mittels Dampfkraftwerken basiert in der Regel auf einen Clausius-Rankine-Kreisprozess. Dieses Verfahren hat zwei Nachteile. Zum einen muss der Dampf nach der Entspannung in den Dampfturbinen kondensiert werden, was in Kühltürmen oder mittels Flusswasserkühlung geschieht. Dabei geht sehr viel Wärme, etwa 60%, verloren. Nebst dem Wärmeverlust wird dadurch auch die Umwelt mit Abwärme belastet, was ebenfalls unerwünscht ist. Zum anderen ist der Niederdruckteil an die Umgebungstemperatur gebunden. Um einen ausreichenden Wirkungsgrad zu erreichen müssen hochdruckseitig hohe Temperaturen, von etwa 600 bis 800°C eingesetzt werden. Das heisst, aber dass nur Wärme mit hoher Temperatur in elektrische Energie umgewandelt werden kann. Erdwärme, Solarwärme oder Wärme in Form von Wärmerückgewinnung kann mit dem Rankine-Kreisprozess nicht wirtschaftlich in elektrische Energie umgewandelt werden.

Aus der DE 3427219 ist z. B. ein Dampfkraftmaschinen-Kreisprozess für Gasturbinen oder Kolbendampfmaschinen bekannt, der mit einem überkritischen Bereich eines Arbeitsstoffes arbeitet. Ein Heiss- oder Kaltgas eines Arbeitsstoffes wird im überkritischen Temperaturbereich und Druckbereich unmittelbar aus der Flüssigphase gewonnen und bei konstantem überkritischem Druck weiter erhitzt und einer Gasturbine zugeführt. In der Gasturbine wird das Gas bis nahe an den kritischen Punkt des Arbeitsstoffes adiabatisch oder polytropisch expandiert. Eine weitere Abkühlung des Gases bis zu seiner vollständigen Verflüssigung wird mittels einer Wärmepumpe oder einer Expansionskammer vorgenommen. Die weitere Abkühlung erfolgt bei oder unterhalb der kritischen Temperatur, aber noch oberhalb des kritischen Drucks. Die gesamte vom überkritischen Dampfkraft-Kreisprozess von aussen aufgenommene Wärme, d. h. die Flüssigkeits- und Überhitzungswärme sowie die bei Kaltdampfbetrieb während der Expansion über die Turbinenwandung aufgenommene Wärme, kann in Arbeit konvertiert werden.

Die WO 2012/049259 A1 zeigt ein Verfahren und eine Anlage zur Umwandlung einer externen Wärmequelle mit vergleichsweise niedriger Temperatur mit einem Clausius-Rankine-Kreisprozess. Bei dem Verfahren wird ein Medium in der flüssigen Phase durch eine externe Energiequelle zu einem flüssigen Medium komprimiert. Das komprimierte, flüssige Medium wird durch Wärme erhitzt, die wenigstens teilweise von der externen Wärmequelle stammt. Dadurch wird das Medium expandiert und in die überkritische Phase gebracht. Anschliessend wird der Druck des erhitzten Mediums auf einen vorbestimmten Wert reduziert und zwar durch Arbeitsaufwand zur Erzeugung von elektrischer Energie. Die Frequenz der Energie wird auf eine gewünschte Ausgabefrequenz konvertiert und Temperatur und Volumen des Mediums werden reduziert, um das Medium in die flüssige Phase zu bringen und dem in den Kreislauf zurück zu führen. Zwischen dem flüssigen Medium und dem entspannten Dampf werden mehrere Wärmetauscher vorgesehen. Dieser Prozess ist für die Verwendung von Erdwärme und Solarwärme auf Grund der erforderlichen Temperaturbereiche nicht geeignet.

Aus DE 33 27 838 A1 ist ein Dampfkraftmaschinen-Kreisprozess zur Umwandlung von Energie mittels eines Arbeitsmediums bekannt. Hierbei wird ein in einem Dampferzeuger verdampftes Arbeitsmedium hohen Drucks und hoher Temperatur in einer Dampfturbine entspannt, wobei der Abdampfstrahl dazu benutzt wird, um mittels einer Dampfstrahlkältemaschine oder einer Kältemaschine mit Vorkühlung eine hohe Kondensationsrate des Abdampfes bei niedriger Temperatur zu erreichen. Ein dabei nicht kondensierter Restdampfanteil wird mittels einer Wärmepumpe vollends zur Kondensation gebracht, wobei die Kondensationswärme vom Restdampfanteil auf den zuvor kondensierten Abdampfanteil übertragen wird. Demnach liegt nach der Dampfentspannungsvorrichtung das Arbeitsmedium als Sattdampf vor, welcher erst durch die Drosselung und der dabei erzielten Abkühlung in der sogenannten "Dampfstrahlkältemaschine" zumindest teilweise kondensiert, wobei die kinetische Energie des Dampfstrahls genutzt wird.

Aus US 2004/182082 A1 ein System zur Energieerzeugung bekannt, umfassend eine Kraftmaschine, in welcher erhitztes Fluid hohen Drucks in einer Dampfentspannungseinrichtung entspannt und das entspannte Fluid in einen Sammelbehälter geleitet wird. Aus dem Sammelbehälter wird das Fluid von einem Verdichter angesaugt, wobei ein nicht-kondensierter Anteil direkt angesaugt wird. Ein kondensierter Anteil wird über eine Entspannungseinrichtung und einen Wärmetauscher verdampft, wobei Kondensationswärme des aus der Dampfentspannungsvorrichtung austretenden Fluid zur Verdampfung des auf einen niedrigeren Druck entspannten Anteils genutzt wird.

WO 2008/009681 A1 beschreibt die Nutzung eines kryogenen Fluid zur Energieerzeugung mit kalter Verbrennung.

### Aufgabe der Erfindung

Es ist eine Aufgabe einer Wärmekraftanlage nach der vorliegenden Erfindung, insbesondere von Wärmekraftmaschinen, Wärmeverlustquellen zu vermeiden, die für die verwendeten Kreisprozesse erforderliche Temperatur zu senken und einen Wirkungsgrad der Anlage zu verbessern, insbesondere die Umwandlung in elektrische Energie zu erhöhen.

Diese Aufgabe wird durch eine Wärmekraftanlage nach Anspruch 1 und ein Verfahren zur Energiegewinnung nach Anspruch 9 erfüllt. Vorteilhafte Ausgestaltungen und weitere Ausführungsbeispiele sind in den abhängigen Ansprüchen beschrieben.

Ein Energieumwandlungsverfahren zur Umwandlung von Wärme in mechanische oder elektrische Energie mittels eines Arbeitsmediums nach der vorliegenden Erfindung weist folgende Schritte. Es wird ein Dampfzustand im Arbeitsmedium mit einem ersten Druck in einem Dampferzeuger erzeugt. Das verdampfte Arbeitsmedium wird in einer Dampfentspannungsvorrichtung auf einen niedrigeren, zweiten Druck entspannt. Die Dampfentspannungsvorrichtung umfasst je zwei Arbeitszylinder mit Einlassventilen zum Einlassen des verdampften Arbeitsmediums symmetrisch gegenüberliegend und mit einem Kolben verbunden. Eine durch die Entspannung gewonnenen Energie wird abgeführt, beispielsweise an einen Generator. Zur Übertragung wird ein Getriebe, wie z. B. ein Hydraulikgetriebe verwendet. Nach der Erfindung verläuft das Entspannen des Dampfzustands durch eine Sättigungslinie des Arbeitsmediums, vorzugsweise durch den kritischen Punkt des Arbeitsmediums. Dabei wird das Arbeitsmedium in einer Trennvorrichtung in einen nicht-kondensierten Anteil und einen kondensierten Anteil getrennt. Anschliessend wird der nicht-kondensierte Anteil in einem Verdichter zu einem verdichteten, nicht-kondensierten Anteil verdichtet. Der verdichtete, nicht-kondensierte Anteil wird gekühlt und zu einem verdichteten kondensierten Anteil kondensiert. Dann werden der verdichtete, kondensierte Anteil und der anfänglich kondensierte Anteil erwärmt und die Anteile werden gemeinsam in den Dampferzeuger rückgeführt.

Eine Wärmekraftanlage zur Umwandlung von Energie mittels eines Arbeitsmediums zur Durchführung des erfindungsgemässen Verfahrens weist einen Dampferzeuger zur Verdampfung des Arbeitsmediums bei einem ersten Druck, eine Dampfentspannungsvorrichtung, umfassend je zwei Arbeitszylinder mit Einlassventilen zum Einlassen des verdampften Arbeitsmediums, symmetrisch gegenüberliegend und mit einem Kolben verbunden zur Entspannung des sich im Dampfzustand befindenden Arbeitsmediums auf einen niedrigeren, zweiten Druck, einen Kondensator und eine Kondensatpumpe auf. Als Wärmequelle für das Arbeitsmedium kann Wärme aus Verbrennung, Geothermie, Solaranlagen, Abwärme aus Kühlanlagen und/oder Wärmerückgewinnung verwendet werden. Der Kondensator kühlt und verflüssigt das aus der Dampfentspannungsvorrichtung ausgelassene Arbeitsmedium. Die Dampfentspannungsvorrichtung ist derart eingerichtet, dass ein von der Dampfentspannungsvorrichtung entspanntes Arbeitsmedium einen kondensierten Anteil und einen nicht-kondensierten Anteil aufweist. Die Entspannung verläuft im Wesentlichen durch eine Polytrope des Arbeitsmediums, erfindungsgemäss durch eine Sättigungslinie, insbesondere dessen kritischen Punkt. Ferner sind eine Trennvorrichtung zur Trennung des kondensierten Anteils und des nicht-kondensierten Anteils und ein Verdichter zur Verdichtung des nicht-kondensierten Teils des Arbeitsmediums vorgesehen. Dabei wird der nicht-kondensierte Anteil des entspannten Arbeitsmediums zumindest teilweise durch den kondensierten Anteil in dem Kondensator kondensiert.

Mit dem Verfahren nach der Erfindung kann auch Wärme niederer Temperatur, wie etwa aus Holzfeuerung, geothermische Quellen, Wärmerückgewinnung, mit gutem Wirkungsgrad in elektrische Energie umgewandelt werden.

Das Entspannen des im Dampferzeuger verdampften Arbeitsmediums erfolgt durch eine Nassdampfentspannung und das Kühlen und Kondensieren des verdichteten, nicht-kondensierten Anteils erfolgt vorzugsweise mittels des kondensierten Anteils. Der zweite Druck für die Entspannungsphase wird vorteilhaft mit einem Realgasfaktor Z für das Arbeitsmedium am kritischen Punkt bestimmt. Bei dem Verfahren kann der nicht-kondensierte Anteil 50% bis 60% des verdampften Arbeitsmediums betragen. Entsprechend beträgt der anfänglich kondensierte Anteil 40% bis 50%.

In einer Ausführungsform der Wärmekraftanlage nach der Erfindung kann die Trennvorrichtung ein Gehäuse umfassen, wobei in einem oberen Bereich des Gehäuses der Verdichter, in einem unteren Bereich des Gehäuses die Dampfentspannungsvorrichtung und in einem Bodenbereich unter dem unteren Bereich eine Pumpe zum Abpumpen des einen kondensierten Anteils vorgesehen sind.

Die Phasentrennung kann z. B. nach dem Zentrifugenprinzip in einer Turbine erfolgen. Die Form der Schaufeln der Turbine wird hierfür vorteilhaft angepasst, sodass das verdampfte Arbeitsmedium getrennt wird und die Anteile über einen Kondensatanschluss und eine Restdampfsaugleitung aus der Turbine abgeführt werden kann.

In der Wärmekraftanlage nach der Erfindung umfasst die Dampfentspannungsvorrichtung Arbeitszylinder mit Einlassventilen zum Einlassen des verdampften Arbeitsmediums und Kolben, die sich an die Arbeitszylinder anschliessen, wobei je zwei Arbeitszylinder gegenseitig an der Trennvorrichtung angeordnet sein. Das heisst, je zwei Arbeitszylinder sind symmetrisch gegenüberliegend angeordnet und mit demselben Kolben verbunden.

Die Wärmekraftanlage weist vorzugsweise ein Schwinghebelgetriebe mit wenigstens einem Schwinghebel auf. Das Schwinghebelgetriebe ist mit dem Verdichter zur Verdichtung des nicht-kondensierten Anteils des Arbeitsmediums und einer Pumpe zum Ableiten des kondensierten Anteils aus der Trennvorrichtung gekoppelt. Vorteilhaft kann das Schwinghebelgetriebe in dem Gehäuse der Trennvorrichtung untergebracht sein. Das Schwinghebelgetriebe kann die Arbeitszylinder und Kolben von dem Schwinghebelgetriebe antreiben. Ein Schwinghebel kann mit dem Kolben der Dampfentspannungsvorrichtung und einem Kolben des Restdampfverdichters gekoppelt sein und um eine Hebelwelle rotierend angeordnet sein. Der Schwinghebel ist vorzugsweise auch an einen Kurbeltrieb gekoppelt und überträgt Entspannungsarbeit des Arbeitsmediums aus den Arbeitszylindern auf den Kurbeltrieb. Der Kurbeltrieb kann die Arbeit weiter an einen Generator abgeben.

In einer bevorzugten Ausführungsform der Wärmekraftanlage nach der Erfindung weisen die Kolben Auslassventile auf, die im Kolben eingebaut sind und durch einen Schaltstift steuerbar sind. Der Schaltstift wird beispielsweis mit Hilfe einer Kulisse für den Kolben und einer Kopplung an das Schwinghebelgetriebe geführt. Bei Entspannung des Arbeitsmediums kann ein Auslassventil auf der einen Seite geschlossen werden, während ein Auslassventil auf der anderen Seite offen ist und der entspannte Dampf ausgestossen werden kann.

Weiter kann bei einer Ausführungsform der Wärmekraftanlage nach der Erfindung der Verdichter Verdichtereinlassventile und Verdichterkolben umfassen. Dabei ist ein Verdichtereinlassventil im Verdichterkolben angeordnet ist und ist mittels einer Kolbenstange steuerbar ist. Die Kolbenstange ist vorzugsweise an das Schwinghebelgetriebe gekoppelt. Dadurch wird die Verdichtung des nicht-kondensierten Anteils an die Entspannung des verdampften Arbeitsmediums gekoppelt.

Gemäss dem Stand der Technik wird bei Wärmekraftmaschinen von einem Carnot'sche Kreisprozess nach der Theorie des idealen Gases mit zwei Adiabaten und zwei Isothermen ausgegangen. Das Verfahren und die Wärmekraftanlage nach der Erfindung bezieht jedoch darüber hinaus die zwischenmolekulare Anziehung der Moleküle mit ein, wie nachfolgend erläutert wird. Wodurch ein verbesserter Wirkungsgrad der Anlage erreicht werden kann.

Mit diesem Verfahren nach der Erfindung wird ein erheblicher Verlustfaktor herkömmlicher Anlagen eliminiert. Es werden die Kühltürme ersetzt und damit wird das Verfahren wirtschaftlicher. Die Effizienz wird erheblich verbessert und die Umwelt wird weniger mit Abwärme belastet. Es besteht keine Abhängigkeit von der Umgebungstemperatur und die Prozesstemperatur gesenkt werden. Das Verfahren und die Anlage ist auch für Wärme niederer Temperatur wie etwa Geothermische, solche aus Holzfeuerung, aus Wärmerückgewinnung, geeignet und eine Energieumwandlung in mechanische, resp. elektrische Energie erfolgt mit gutem Wirkungsgrad.

Mit der Wärmekraftanlage werden Verbesserungen erzielt, und zwar:
- im Hinblick auf den Wirkungsgrad, d. h. von der Anlage abgegebene mechanische oder elektrische Energie im Verhältnis zu der in die Maschine eingetragene Wärmeenergie;
- im Hinblick auf Einsatzmöglichkeiten der Wärmekraftanlage auch bei niedriger absoluter Temperatur der Wärmequelle, wie z. B. bei Solarthermie, Geothermie, Holzfeuerung, Wärmerückgewinnung, etc.; sowie
- im Hinblick auf Auswirkungen auf die Umwelt, da keine nennenswerte Abwärme an Umgebung erfolgt, keine Kühltürme erforderlich sind, etc.

Dies wird dadurch erreicht, dass bei einer Wärmekraftanlage, in Abwandlung des klassischen Rankine-Kreisprozesses, bei dem Verfahren nach der Erfindung ein Arbeitsmedium durch von aussen zugeführte Wärme zunächst in einen überkritischen Zustand gebracht wird. Das überkritische Arbeitsmedium wird dann durch den kritischen Punkt des Arbeitsmediums hindurch unter Verrichtung mechanischer Arbeit entspannt. Anschliessend wird das entstandene Gas/Flüssigkeit-Phasengemisch, das heisst der nicht-kondensierte Anteil und der kondensierte Anteil (Restdampf/Kondensat) getrennt. Der Restdampfanteil wird zunächst verdichtet und dabei erwärmt und dann mit dem nicht erwärmten und daher kälteren Kondensatanteil in Wärmetausch gebracht, so dass der Restdampfanteil verflüssigt wird.

Die Wärmekraftanlage enthält einen Dampferzeuger, in welchem das Arbeitsmedium gemäss Schritt durch Wärmezufuhr in einen überkritischen Zustand gebracht wird, eine Dampfentspannungsvorrichtung zum Entspannen des Arbeitsmedium, z. B. in Form des Arbeitszylinder, wie oben angegeben, oder einer Turbine oder dgl. In der Dampfentspannungsvorrichtung verrichtet das überkritische Arbeitsmedium bei der Entspannung mechanische Arbeit. Weiter ist ein Verdichter für den Restdampf sowie eine Trennvorrichtung vorgesehen, die mit der Dampfentspannungsvorrichtung und dem Restdampfverdichter in Fluidverbindung steht. Die Trennvorrichtung weist einen oberen, einen unteren und einen Bodenbereich auf, wobei sich in dem Bodenbereich der Kondensatanteil und in dem unteren bis oberen Bereich der nicht-kondensierte Restdampfanteil sammelt. Der untere Bereich der Trennvorrichtung kann mit der Dampfentspannungsvorrichtung in Fluidverbindung gebracht werden, und der obere Bereich kann mit dem Restdampfverdichter in Fluidverbindung gebracht werden. Nach der Entspannung des überkritischen Arbeitsmediums in der Dampfentspannungsvorrichtung tritt dieses aus der Dampfentspannungsvorrichtung aus und gelangt in die Trennvorrichtung, in der sich im Bodenbereich der Kondensatanteil und darüber der Restdampfanteil sammeln. Der Bodenbereich des Phasentrenngefässes ist mit einer Pumpe in Fluidverbindung, um den Kondensatanteil zum Dampferzeuger zurück zu pumpen. Im Restdampfverdichter wird der Restdampfanteil verdichtet und dabei erwärmt. Der verdichtete und erwärmte Restdampf wird (a) in einem Wärmetauscher/Kondensator mit dem Kondensat in Wärmeaustausch gebracht oder bzw. insbesondere (b) mit dem Kondensat vermischt, wobei dann der Restdampf ebenfalls kondensiert wird.

Die Dampfentspannungsvorrichtung weist wie oben erläutert z. B. mindestens eine Zylinder/Kolben-Einheit auf, insbesondere mit einer Boxer-Anordnung, und kann mit einem Generator gekoppelt werden. Dadurch wird ein erster Teil der an der Dampfentspannungsvorrichtung durch das überkritische Arbeitsmedium verrichteten mechanischen Arbeit an den Generator abgeleitet, um elektrische Energie zu erzeugen. Die Dampfentspannungsvorrichtung und der Restdampfverdichter sind ebenfalls miteinander gekoppelt, z. B. über ein Schwinghebelgetriebe mit entsprechendem Gestänge, wie oben erwähnt. Dadurch wird ein zweiter Teil der an der Dampfentspannungsvorrichtung durch das überkritische Arbeitsmedium verrichteten mechanischen Arbeit bei dem Restdampfverdichter verwendet, um den Restdampfanteil zu verdichten und zu erwärmen.

Anders als bei einer Kogeneration, bei der chemische Energie vorwiegend in elektrische und kalorische Energie als gezielt genutzte Abwärme umgewandelt wird, kann bei der Erfindung die aus einer Wärmequelle, z. B. Solarthermie, Geothermie, etc., stammende Energie derart verwendet werden, dass am Ende vorwiegend mechanische oder elektrische Energie und praktisch keine kalorische Energie, d.h. keine nennenswerte Abwärme entsteht.

Als Arbeitsmedium kommen neben Luft auch andere Substanzen in Frage, wie etwa Wasser, Fluorkohlenwasserstoffe, Chlorkohlenwasserstoffe, Alkane, etc., insbesondere auch Stickstoff oder Gemische. Wegen des tiefen kritischen Punktes, d. h. einer tiefen kritischen Temperatur und kritischem Druck, von Stickstoff, Sauerstoff und Argon und ihrem geringen Preis als Luftgemisch wird Luft als Arbeitsmedium bevorzugt. Dadurch lassen sich auch Wärmequellen mit relativ geringer absoluter Temperatur, wie etwa Solarthermie, Geothermie, etc., zur praktisch vollständigen Umwandlung in mechanische oder elektrische Energie verwerten.

### Kurze Beschreibung der Zeichnungen

Die Arbeitsweise des Verfahrens und eine Ausführungsformen gemäss der Erfindung werden im Folgenden anhand der Zeichnungen dargestellt, die lediglich zur Erläuterung dienen und nicht einschränkend auszulegen sind. Aus den Zeichnungen offenbar werdende Merkmale der Erfindung sollen einzeln und in jeder Kombination als zur Offenbarung der Erfindung gehörend betrachtet werden. In den Zeichnungen zeigen:
Fig. 1: Einen Kreisprozess für eine Wärmekraftanlage mit Wärmerückgewinnung nach der Erfindung.
Fig. 2: Die Maxwell-Verteilung des Kreisprozesses nach Figur 1 beim kritischen Punkt.
Fig. 3: Die Maxwell-Verteilung des Kreisprozesses nach Figur 1 im Endzustand.
Fig. 4: Der Realgasfaktor Z für Luft im Sättigungszustand als Funktion des spezifischen Volumens des Kreisprozesses nach Figur 1.
Fig. 5: Vergleich der adiabaten Zustandsänderung zur Nassdampfentspannung des Kreisprozesses nach Figur 1.
Fig. 6 : Einen Kreisprozess mit Nassdampfentspannung nach der Erfindung.
Fig. 7 : Impulsvektoren beim Kreisprozess nach Figur 6 an einer bewegten Wand.
Fig. 8 : Kalorische Auslegung eines Kondensators nach der Erfindung.
Fig. 9 : Eine Wärmekraftanlage nach der Erfindung mit einem Kondensationsmotor.
Fig. 10: Einen Schnitt durch den Kondensationsmotor nach Figur 9.
Fig. 11: Einen Schnitt durch den Arbeitszylinder des Kondensationsmotors nach Figur 9.
Fig. 12: Einen Kolben mit Auslassventil des Kondensationsmotors nach Figur 9.
Fig. 13: Ein Auslassventil nach Figur 12.
Fig. 14: Eine Ventilsteuerung der Wärmekraftanalage nach Figur 9.
Fig. 15: Einen Restdampfverdichter der Wärmekraftanalage nach Figur 9.
Fig. 16: Einen Kolben eines Restdampfverdichters der Wärmekraftanalage nach Figur 9.
Fig. 17: Eine Dampfturbine zur Phasentrennung nach dem Zentrifugenprinzip.

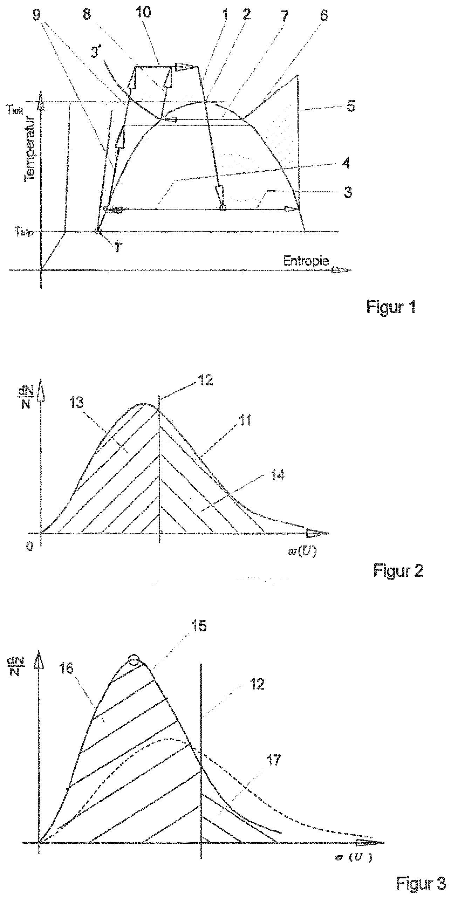

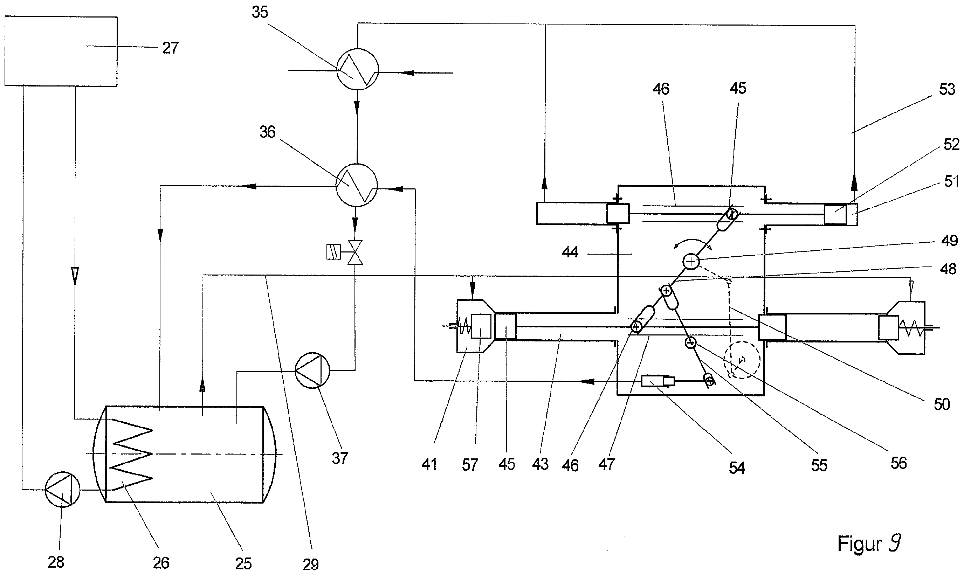

In den Figuren 1 bis 8 wird der Kreisprozess beschrieben, der dem erfindungsgemässen Verfahren zur Umwandlung von Energie mittels eines Arbeitsmediums in einer Wärmekraftanlage zu Grunde liegt. In den Figuren 9 bis 16 wird eine erfindungsgemässe Wärmekraftanlage dargelegt, die nach dem erfindungsgemässen Energieumwandlungsverfahren arbeitet.

Voraussetzung, dass Wärmekraftmaschinen mit Wärmerückgewinnung ausgerüstet werden können ist ein neues Verfahren, wie es auf Figur 1 dargestellt ist. Dieses Verfahren zeichnet sich primär dadurch aus, dass ein Dampf durch die Polytrope, erfindungsgemäss durch die Sättigungslinie und bevorzugt durch den kritischen Punkt 2 entspannt wird. Bei dieser Entspannung 1 entsteht eine Mischphase, bestehend aus einem nicht-kondensierten Anteil, dem Dampf 3, und einem kondensierten Anteil, dem Kondensat 4. Isentrop betrachtet, entsteht bei der Entspannung 1 durch den kritischen Punkt, etwa bei Luft, ca. 48% Dampfphase und 52% Kondensat.

Für das Verfahren nach der Erfindung wird ausgenützt, dass das Arbeitsmedium in der Dampfphase bei Entspannung kondensieren kann. Dies wird durch eine Kondensation aufgrund der Dipolarität der Dampfmoleküle verursacht, welche die Grundlage für eine lose Brückenbindung ist, auf der die flüssige Phase des Arbeitsmediums beruht. Die Brückenbindung stellt sich ein, wenn die innere Energie von zwei Dampfmolekülen, die zusammenstossen, kleiner ist als eine Bindungsenergie des Dipols. Beim kritischen Punkt existieren Dampfphase und flüssige Phase im thermischen Gleichgewicht. Am kritischen Punkt ist also die Summe der inneren Energie der Moleküle, deren innere Energie höher ist als die Bindungsenergie des Dipols, im Phasengleichgewicht mit den Dampfmolekülen, deren innere Energie kleiner ist als diejenige des Dipols.

In Figur 2 ist die Maxwell-Verteilung 11 der Moleküle für den kritischen Punkt dargestellt. Da die innere Energie eine quadratische Funktion der Molekülgeschwindigkeit ist, ist die Bindungsenergie beim quadratischen Mittel 12 angegeben. Die Fläche unter der Kurve entspricht dem Anteil der Moleküle bei der entsprechenden Molekülgeschwindigkeit. Die Fläche 13 auf einer Seite des quadratischen Mittels 12 entspricht annähernd der Fläche 14 auf der anderen Seite des quadratischen Mittels 12. In diesem Zustand kann sich keine bleibende Brückenbindung einstellen, weil diese immer wieder von den schnelleren Molekülen zerstört wird.

Zum Vergleich ist in Figur 3 ist die Maxwell-Verteilung für einen Endzustand des Arbeitsmediums dargestellt. Die Temperatur ist nach der Entspannung tiefer als am Anfang, wodurch sich die Verteilfunktion nach Maxwell 15 verschiebt, während die Bindungsenergie 12 als konstant angenommen wird. Die Anzahl der Moleküle, deren innere Energie kleiner ist als die der Brückenbindung, ist wesentlich grösser. Die Anzahl der Moleküle deren innere Energie grösser ist als die der Bindungsenergie, ist wesentlich kleiner. Sie können nicht mehr alle Brückenbindungen zerstören, sodass sich Kondensation einstellt. Die Anzahl der kondensierten Moleküle ergibt sich aus der Differenz der Flächen 16 und 17. Damit ist obiger Ansatz, dass sich bei der isentropen Entspannung durch den kritischen Punkt, Kondensation einstellt, bestätigt. Die Wärmekraftanlage nach der Erfindung stellt also eine Art Kondensationsmotor dar.

Allerdings müssen auch die Verluste berücksichtigt werden, wie die Reibungs-, Leck- und Isolationsverluste. Die Reibung wird in Wärme umgesetzt, und diese wird eine Verdampfung von Kondensat verursachen. Die Leckverluste werden das Saugvolumen der Restgasverdichtung erhöhen. Damit ergibt sich eine zunehmende Entropie. Bei Verlusten von 20% wird ein Phasengemisch aus etwa 40% Kondensat und 60% Dampf erreicht werden.

Die Kondensationswärme hat beim Tripelpunkt T des Arbeitsmediums ihren Maximalwert. Der Wert der Kondensationswärme nimmt dann mit zunehmender Temperatur ab und erreicht beim kritischen Punkt den Wert Null. Das Prinzip einer Wärmerückgewinnung mittels interner Kondensation nach der vorliegenden Erfindung besteht nun darin, dass der Dampfanteil mittels Verdichtung derart erwärmt wird, dass er mit dem kalten Kondensatanteil verflüssigt werden kann.

Gemäss der Erfindung wird ein Kreisprozess mit einem Arbeitsmedium genutzt, welcher aus den folgenden Schritten, wie in Figur 1 dargestellt, besteht:
- Entspannen 1 des Dampfes durch den kritischen Punkt 2,
- Trennen des nicht-kondensierten Teils, d.h. des Dampfanteils, 3 und des kondensierten Teils, d.h. des Kondensatanteils, 4 in einer Trennvorrichtung,
- Verdichten 5 des nicht-kondensierten Dampfanteils 3 in einem Verdichter,
- Rückkühlen 6 des verdichteten, nicht-kondensierten Dampfanteils 3,
- Kondensieren 7 des bisher nicht-kondensierten Dampfanteils 3 mit kaltem Kondensat in einem Kondensator zu einem verdichteten Anteil 3',
- Erwärmen 8 des verdichteten, kondensierten Anteils 3'
- Erwärmen 9 und ggf. Pumpen des bereits anfänglich kondensierten Teils 4 und
- Verdampfen 10 des ganzen Kondensates, bestehend aus verdichtetem, kondensiertem Dampfanteil 3' und anfänglich kondensiertem Kondensatanteil 4.

Die Erfindung nutzt den Effekt der Nassdampfentspannung. Bestimmt man den Druck beim kritischen Punkt aus der kritischen Dichte und der kritischen Temperatur des verwendeten Arbeitsmediums nach dem Gasgesetz, so erhält man für Luft einen Druck von 131 bar. Nun ist der kritische Druck bei Luft effektiv 37.2 bar. Dieser reduzierte Druck wird mit dem Wirken der zwischenmolekularen Anziehungskräfte erklärt und dieser wird mit dem Realgasfaktor Z bestimmt, wie er etwa im VDI-Wärmeatlas (Ausgabe 1984, Blatt Da 13) definiert ist.

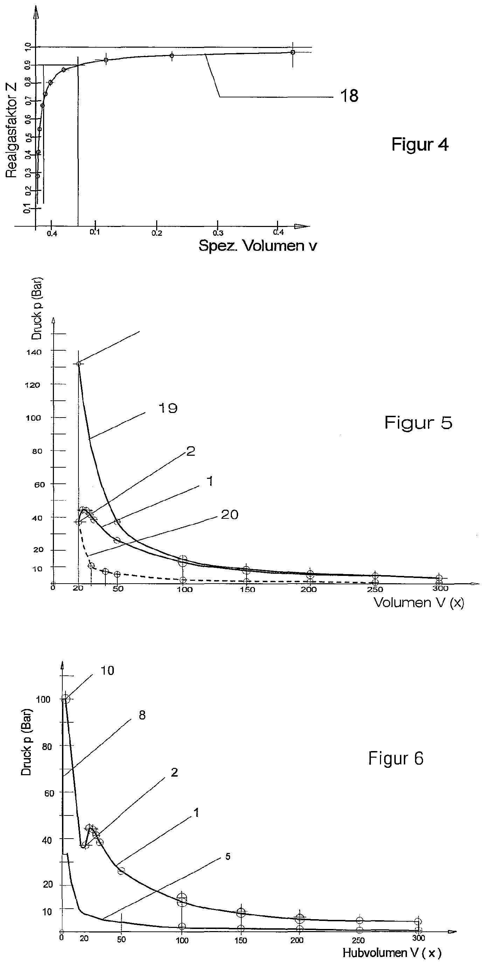

In Figur 4 ist der Realgasfaktor Z in Abhängigkeit des spezifischen Volumens v für Luft im Sättigungszustand 18 dargestellt, auf der Basis von Tabelle 17; Stoffwerte von Luft im Sättigungszustand, VDI-Wärmeatlas, Blatt DB 11. Die zwischenmolekulare Anziehung wirkt sehr stark, wenn die Dichte hoch und der zwischenmolekulare Abstand klein ist. Unmittelbar nach dem kritischen Punkt nimmt die zwischenmolekulare Anziehung sehr stark ab. Das kann dazu führen, dass die Abnahme der zwischenmolekularen Anziehung stärker ist als die Volumenzunahme bei der Entspannung. In diesem Bereich kann der Druck konstant bleiben oder sogar bei der Entspannung zunehmen, was bei der Konstruktion der Wärmekraftanalage zu berücksichtigen ist. Mit zunehmendem Volumen geht der Dampf in die Gasphase über.

Figur 5 zeigt diesen Zusammenhang in einem Druck-Volumendiagramm. Die Nassdampfentspannung 1 unter Berücksichtigung des Realgasfaktors Z steigt unmittelbar nach dem kritischen Punkt 2 an, respektive der Druck nimmt zu, nähert sich dann aber der Adiabaten 19 an, welche von einem Druck 131 bar ausgeht. Der Druck von 131 bar ergibt sich mit dem allgemeinen Gasgesetz aus der kritischen Temperatur und der kritischen Dichte des Arbeitsmediums. Das heisst, je grösser das spezifische Volumen wird, umso grösser wird der zwischen-molekulare Abstand und der Dampf geht in den Gaszustand über. Die Adiabate für die reine Gasentspannung, bestimmt nach dem allgemeinen Gasgesetz, ausgehend vom kritischen Punkt, würde gemäss der Linie 20 verlaufen. Die Fläche unter der Zustandsfunktion entspricht der geleisteten Arbeit. Aus Figur 5 ist daher ersichtlich, dass mit der Nassdampfentspannung 1 mehr Arbeit geleistet wird, als sich dies bei der reinen Gasentspannung bzw. der adiabaten Zustandsänderung gemäss der Linie 20 ergibt, ausgehend vom kritischen Punkt.

In Figur 6 ist der Kreisprozess für die Wärmekraftanlage nach der Erfindung, bzw. den Kondensationsmotor, als Druck-Volumen-Diagramm dargestellt. Der Verlauf der Nassdampfentspannung wird wieder mit dem Bezugszeichen 1 angegeben. Bei der Verdichtung des Restdampfes 5, ist das Volumen kleiner als 60% und die Zustandsänderung, bedingt durch die zwischenmolekulare Anziehung, ist flacher. Das heisst, die Verdichtungsarbeit, bedingt durch die zwischenmolekulare Anziehung, ist kleiner als es der allgemeinen Gastheorie entspricht. Die Arbeit bei der Nassdampfentspannung 1 kann also nicht mit der Adiabatenfunktion, gemäss dem allgemeinen Gasgesetz bestimmt werden. Da für den Realgasfaktor Z keine explizite Funktion zur Verfügung steht, wird die Hubarbeit abschnittsweise berechnet.

Eine Berechnung der Hubarbeit ist umso genauer je genauer die damit verbundenen Prozesse erfasst werden. Bei dem Verfahren nach der Erfindung wird für die Umwandlung von Wärme in Arbeit davon ausgegangen, dass sich dieser Prozess mit der kinetischen Wärmetheorie besser erklären und exakter bestimmen lässt als es mit der kalorischen Theorie möglich ist.

In der kinetischen Gastheorie wird die Kraftwirkung, welche mit dem Dampfdruck erzeugt werden kann, auf die Molekülstösse zurückgeführt. Dabei befindet sich die Masse des Atoms zum grossen Teil im Atomkern, welcher sehr klein ist. Der Atomkern entspricht etwa einem hunderttausendsten Teil des Atomdurchmessers. Um diesen Atomkern existiert ein mehrheitlich positives Kraftfeld, das von den Positronen erzeugt wird. Beim Zusammenstossen zweier Atome geraten zwei gleichpolige Kraftfelder aneinander. Gleiches gilt für Moleküle, da diese aus Atomen aufgebaut sind. Molekülstösse werden daher als elastisch angesehen. Es wird hier angenommen, dass der Stoss eines Moleküls auf die bewegte Kolbenwand der Wärmekraftanalage einem Spezialfall des elastischen Stosses entspricht, nämlich dem Stoss auf die bewegte Wand. Danach ändert sich die Geschwindigkeit des stossenden Moleküls um das Doppelte der Wandgeschwindigkeit, respektive der Kolbengeschwindigkeit.

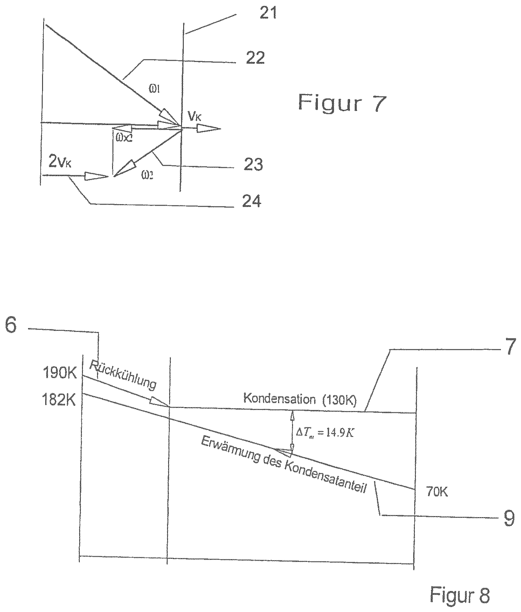

In Figur 7 wird der Stossprozess zwischen den Molekülen erläutert. Der Stossprozess besteht aus zwei Phasen, der Kompressionsphase und der Expansionsphase. Die Kompressionsphase ist die Phase, in der die Kraftfelder in einander stossen. Dabei wird kinetische Energie in potentielle Energie umgewandelt. Die Expansionsphase ist die Phase, in der sich die Moleküle wieder abstossen, die potentielle Energie wird wieder in kinetische Energie zurück verwandelt. Zwischen der Kompressionsphase und der Expansionsphase liegt der Wendepunkt des Stossprozesses. Es ändert sich also Richtung und Absolutbetrag des Geschwindigkeitsvektors, wie in Figur 7 dargestellt. Geschwindigkeit und Impuls sind Vektoren, entsprechend muss die Energiebilanz pro Stoss vektoriell behandelt werden. Ein Molekül trifft vor dem Stoss mit einer mittleren Molekülgeschwindigkeit 22 auf die bewegte Kolbenwand 21. Nach dem Stoss weist das Molekül eine mittlere Geschwindigkeit 23 auf. Die Geschwindigkeit des Moleküls, respektive deren Normalkomponente, ändert sich um das Doppelte der Kolbengeschwindigkeit (2vK), woraus sich eine Änderung der inneren Energie und eine Abnahme der Temperatur ergibt, da die Temperatur eine Funktion der inneren Energie ist.

Beim Molekülstoss auf die Wand wird das Molekül von seiner Geschwindigkeit, etwa der mittleren Molekülgeschwindigkeit, auf Wandgeschwindigkeit verzögert. Durch diese Verzögerung wirkt es mit einer Massenkraft auf die Wand. Beim Stoss auf die bewegte Wand ergibt diese Massenkraft mit der Verschiebung der Wand eine Arbeit. In der Expansionsphase wird das Molekül wieder abgestossen, das heisst beschleunigt. Auch hier entsteht durch die Beschleunigung eine Massenkraft mit der das Molekül auf die Wand wirkt und auch hier ergibt sich mit der Verschiebung der Wand eine Arbeit. Die vom Molekül geleistet Arbeit entspricht gemäss dem Prinzip der Energieerhaltung der Änderung seiner kinetischen Energie. Die pro Hub auf die Wand übertragene Arbeit ist die Summe der pro Molekülstoss geleisteten Arbeit über die Anzahl aller Molekülstösse. Die Anzahl Molekülstösse auf die Wand lässt sich mittels des zweiten Newton'schen Prinzips aus dem Druck berechnen. Diese Berechnungsmethode wurde überprüft, in dem damit die Leistung von Gasverdichtern bestimmt wurde. Es ergab sich eine gute Übereinstimmung.

Nach der Erfindung wird die Kondensation des Arbeitsmediums durch Entspannung in einer Wärmekraftanlage ausgenutzt. Kondensation ist der Übergang von der Gasphase in die flüssige Phase. In der Gasphase können sich die Moleküle frei bewegen, sie haben kinetische, Schwingungs- und Rotationsenergie. Die Moleküle stossen dauernd zusammen und tauschen ihren Impuls aus, gemäss der Brown'schen Molekularbewegung. Die Anteile von kinetischer-, Schwingungs- und Rotationsenergie ergibt sich aus dem Bewegungsfreiheitsgrad.

Die flüssige Phase basiert auf einer losen Dipol-Bindung unter den Molekülen. In dieser losen Brückenbindung können die Moleküle noch schwingen und rotieren; sie haben keine kinetische Energie mehr. Die Brückenbindung kann sich einstellen, wenn die innere Energie der stossenden Moleküle kleiner ist als die Bindungsenergie der Brücke. Moleküle kondensieren also beim Stoss, wenn deren innere Energie kleiner ist als die Bindungsenergie der Brücke. Um einen Dampf zu kondensieren muss den Molekülen innere Energie entzogen werden. Beim Stoss auf die bewegte Wand werden die Moleküle um das Doppelte der Wandgeschwindigkeit verzögert. Das heisst, bei diesem Stoss wird kinetische Energie, resp. innere Energie auf den Kolben übertragen oder anders gesagt, es wird den Molekülen bei der Entspannung innere Energie entzogen, sodass der Dampf kondensieren kann.

Nach dem Verfahren der vorliegenden Erfindung erfolgt eine Trennung des Phasengemisches in einen kondensierten Anteil und eine nicht-kondensierten Anteil. Diese Trennung kann mittels des Schwerkraftprinzip oder der Zentrifugalwirkung erfolgen. Beim Schwerkraftprinzip sammelt sich das Kondensat als kondensierter Anteil am Boden und kann von da abgepumpt werden. Der nicht-kondensierte Anteil in Form des Restdampfs kann am Kopf der Trennvorrichtung, wie etwa eines Phasentrenngefässes, abgesaugt werden.

In Figur 8 ist die kalorische Auslegung des Kondensators dargestellt: Rückkühlen 6 des Dampfanteils, Kondensieren 7 des Dampfanteils primärseitig und Erwärmen 9 des kalten Kondensatanteils im Gegenstrom sekundärseitig im Kondensator. Die Rückkühlung von 60% Dampfanteil mit 40% Kondensatanteil ist möglich, weil die spezifische Wärme des Kondensates etwa doppelt so hoch ist wie diejenige des Dampfes.

Der Wirkungsgrad der Wärmekraftanlage lässt sich wie folgt erklären. Die von der Anlage abgegebene Endleistung, entspricht der Differenz zwischen der bei der Entspannung gewonnen Arbeit und der für die Verdichtung des Restdampfanteils und Erwärmen und Pumpen des Kondensatanteils benötigten Energie. Die Entspannung kann beispielsweise von 100 auf 0.1 bar erfolgen, die Verdichtung des Restdampfanteils etwa von 1 auf 30 Bar; die Masse des Restdampfanteils liegt zwischen 50-60% des entspannten Dampfes. So gehen etwa 30% der bei der Entspannung erzeugten Arbeit in die Restdampfverdichtung über. Die für das Pumpen und Erwärmen des Kondensatanteils notwendige Leistung entspricht etwa 2% des bei der Entspannung gewonnen Arbeit.

Bei dem Verfahren nach der Erfindung wird vorzugsweise Luft als Arbeitsmedium verwendet, einerseits weil sie umweltverträglich ist, aber auch weil es ein gut dokumentiertes Medium ist. Grundsätzlich können aber auch andere Arbeitsmedien, wie z. B. Ammoniak, Kohlendioxid oder halogenierte Wasserstoffe, verwendet werden. Der kritische Punkt von Luft liegt bei -141 °C, also im Tieftemperaturbereich, in dem Luft auch als Dampf und Flüssigkeit, bzw. Kondensat, erscheint.

Figur 9 zeigt schematisch eine Wärmekraftanlage nach der Erfindung mit einem Kondensationsmotor mit Wärmerückgewinnung. Die Wärmekraftanlage weist einen Dampferzeuger 25 mit eingebauter Wärmeeintragsvorrichtung 26 auf. Der Dampferzeuger 25 wird von einer Wärmequelle 27 gespeist. Die Wärmequelle 27 kann sein: Wärme aus Verbrennung, Geothermie, Solaranlagen, Kühlanlagen, Wärmerückgewinnung aus der Anlage, usw. Mit der Wärme wird ein Hochdruckdampf in der Anlage erzeugt und einem Arbeitszylinder 43 des Kondensationsmotors zugeführt. Das Maschinengehäuse 44 wirkt als Trennvorrichtung für einen kondensierten und einen nicht-kondensierten Anteil des Dampfes gemäss der Erfindung, wobei das Maschinengehäuse 44 ein Phasentrenngefäss darstellt. Durch eine Leitung 29 wird der Hochdruckdampf in Druckräume der Arbeitszylinder 43 mit Zylinderköpfen 41 und Kolben 45 geführt. Die Konstruktion des Kondensationsmotors entspricht dem sogenannten Boxerprinzip, bei dem je zwei Zylinder 43 gegenseitig an einem Maschinengehäuse 44 angeordnet sind. Im Zylinderkopf 41 eingebaut sind auch Einlassventile 57 zum Einlassen des Dampfes.

Die Kolben 45 sind mit einer Kolbenstange z. B. über einen Kreuzkopf 46, der in Kulissen 47 geführt wird, an einem Getriebe mit Schwinghebel 48 angeschlossen, auf das die Hubarbeit des Kolbens 45 übertragen wird. Der Schwinghebel 48 sitzt auf einer Schwinghebelwelle 49 mit der die Schwingbewegung nach aussen auf einen Kurbeltrieb 50 übertragen wird. Mit dem Kurbeltrieb 50 wird ein Getriebe angetrieben, vorzugsweise ein stufenlos regulierbares Hydraulikgetriebe, mit dem dann ein Generator angetrieben werden kann. Das Schwinghebelgetriebe ist mit einem Restdampfverdichter 51 gekoppelt. Mit dem Schwinghebel 48 wird über den Kreuzkopf 46 ein Kolben 52 in Zylindern des Restdampfverdichters 51 angetrieben. Der Restdampfverdichters 51 ist an einen Vorkühler 35 und einen Kondensator 36 angeschlossen. Von den Zylindern des Restdampfverdichters 51 führt eine Druckleitung 53 zu einem Vorkühler und weiter zum Kondensator 36. Die Druckleitung 53 ist primärseitig angeschlossen. Vom Kondensator 36 führt eine Leitung zu einer Kondensatpumpe und von dort zurück in den Dampferzeuger 25.

Am Boden des Maschinengehäuses 44 des Schwinghebelgetriebes befindet sich eine Kolbenpumpe 54 mit der das kalte Kondensat mit einer Leitung 37 zur Sekundärseite des Kondensators 36 geführt wird. Vom Kondensator 36 führt eine Leitung zurück zum Dampferzeuger 25. Die Kolbenpumpe 54 wird vom Schwinghebelgetriebe über einen Pumphebel 55 angetrieben, der in einem Lager 56 schwingt.

Bei der Inbetriebsetzung wirkt eine Elektromaschine als Motor, der den Verdichter (51) antreibt, die Anlage auf Druck bringt, den Dampf in den Arbeitszylindern (42) entspannt und damit die Anlage abkühlt und so auf Betriebstemperatur bringt.

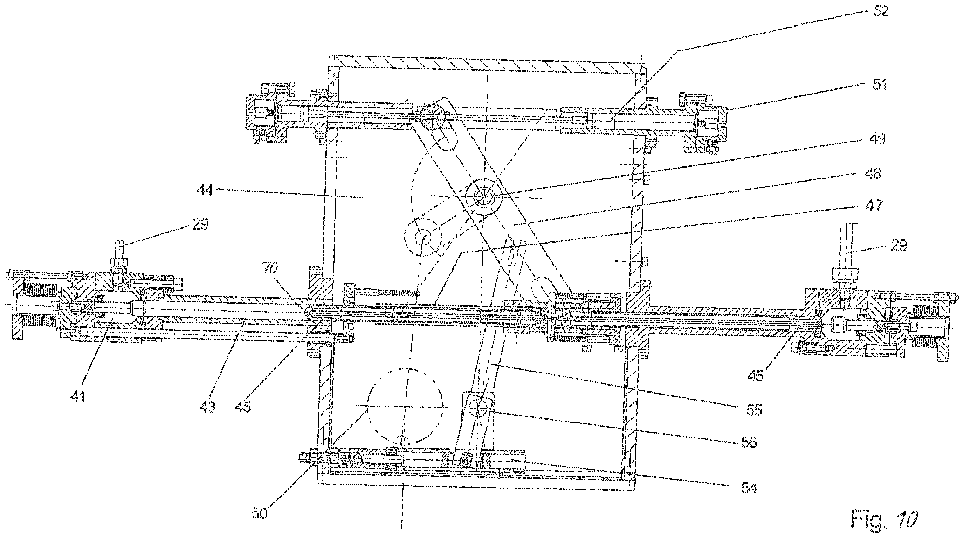

Figur 10 zeigt einen Querschnitt durch das Schwinghebelgetriebe des Kondensationsmotors, bestehend aus dem Maschinengehäuse 44, den Arbeitszylindern 43 und den Kolben 45 des Entspannungsteils des Kondensationsmotors. Mit dem Schwinghebel 48, welcher mit der Schwinghebelwelle 49 gekoppelt ist, wird die Entspannungsarbeit des Arbeitsmediums auf den Kurbeltrieb 50 übertragen. Am Kopf des Phasentrenngefässes in Form des Maschinengehäuses 44 befindet sich der Restdampfverdichter 51. Am Boden des Phasentrenngefässes befindet sich die Kolbenpumpe 54, welche mit dem Pumphebel 55 angetrieben wird, welcher um das Lager 56 schwingt und die notwendige Leistung vom Schwinghebel 48 auf die Kolben 52 der Kolbenpumpe 54 überträgt.

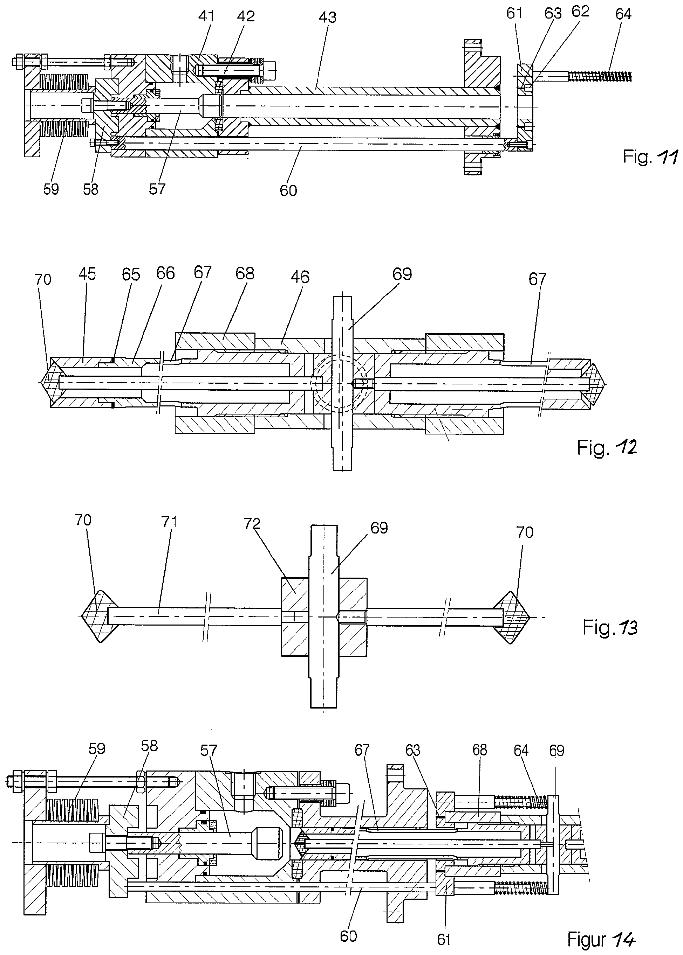

Figur 11 zeigt einen Querschnitt durch den Arbeitszylinder 43 mit dem Zylinderkopf 41, der Zylinderkopfdichtung 42, dem Hochdruckraum, in dem der Hochdruckdampf gespeichert wird, dem Einlassventil 57, einer Ventilbrücke 58, in der das Einlassventil 57 eingeschraubt ist, einer Ventilstange 60, einer Dämpferscheibe 61 mit einer Ringnut 62, einer Abblasbohrung 63 und einer Umschaltfeder 64.

Figur 12 zeigt einen Querschnitt durch den Entspannungskolben 45 mit einem eingebauten Auslassventil 70 mit einem Ventilkegel und einem Zentrierring 65, mit einem Kolbenrohr 66, Auslassschlitzen 67, einem Ringkolben 68, dem Kreuzkopf 46 und einem Umschaltstift 69. Der Kreuzkopf 46 ist seitlich mit Rollen versehen, mit welchen er in der Kulisse 47 geführt ist. Der Zentrierring 65 ist aus einem Material mit guten Trockenlaufeigenschaften, wie etwa PCTFE, damit Reibungsverluste gering gehalten werden können. Mit dem Umschaltstift 69 kann das Auslassventil 70 derart umgeschaltet werden, dass es bei Entspannung des Arbeitsmediums auf der einen Seite geschlossen wird, während es auf der anderen Seite offen ist und der entspannte Dampf ausgestossen werden kann.

Figur 13 zeigt das im Entspannungskolben 45 eingebaute Auslassventil 70, bestehend aus dem Ventilkegel, der Ventilstange 71, einem Gleiter 72 und dem Umschaltstift 69.

Figur 14 zeigt schematisch eine Steuerung von Einlassventil 57 und Auslassventil 70. Gegen Ende des Auslasshubes fährt der Umschaltstift 69 des Kolbens 45 auf die Umschaltfeder 64)und schliesst damit das Auslassventil 70. Gleichzeitig fährt der Ringkolben 68 in die Ringnut 62 der Dämpferscheibe 61 ein und verdichtet den eingeschlossenen Dampf. Nachdem der notwendige Druck erreicht ist, wird die Dämpferscheibe 61 gegen den Zylinderflansch geschoben und damit das Einlassventil 57 geöffnet. Die Abblasbohrung 63 ist derart dimensioniert, dass der eingeschlossene Dampf am Ende des Füllprozesses abgeströmt und der Ringkolben 68 satt auf dem Grund der Ringnut 62 aufliegt. Damit ergibt sich ein definierter Abstand zwischen Einlassventil 57 und Kolben 45 und damit ein definiertes Füllvolumen.

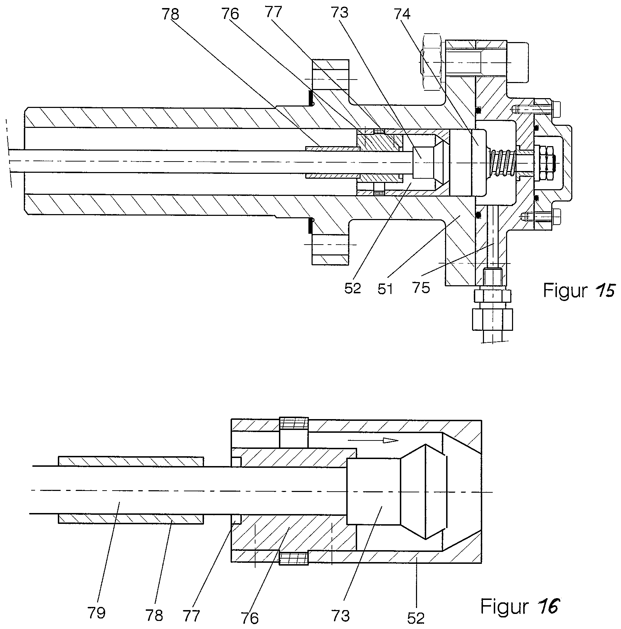

Figur 15 zeigt einen Querschnitt durch den Restdampfverdichter 51 mit Kolben 52. Im Kolben 52 eingebaut ist ein Einlassventil 73 und gegenüberliegend, im Zylinderkopf eingebaut, ein Auslassventil 74. Im Flansch des Zylinderkopfes ist auch ein Dampfauslass 75 vorgesehen. Das Einlassventil 73 wird in einer Führung, wie z. B. einem Kolbenstern 76 geführt, welcher beidseitig mit einer Versatzung 77 versehen ist. Die Versatzung 77 ist einerseits an eine Schulter eines Kegels des Einlassventils 73 und anderseits an eine Dämpferhülse 78 angepasst.

Figur 16 zeigt den Kolben 52 des Restdampfverdichters 51 mit geöffnetem Einlassventil 73. Im Kolben 52 eingebaut ist der der Kegel des Einlassventils 73, der am Ende der Kolbenstange 79 angebracht ist. Die Kolbenstange 79 wird mit dem Kolbenstern 76 geführt und weisst beidseitig je die Versatzung 77 auf. Auf der Kolbenstange 79 ist die Dämpferhülse 78 angebracht, welche beim Schliessen des Ventils 73 den Aufschlag dämpft. Ebenso fährt die Schulter des Ventilkegels in die gegenüberliegende Versatzung ein und dämpft damit den Aufschlag beim Öffnen des Einlassventils 73.

Der Betrieb der Wärmekraftanalage nach der Erfindung läuft im Tieftemperaturbereich ab, es sollte daher bei der Materialwahl für die Bauteile besonders auf die Gleitproblematik bei den mechanischen Teilen geachtet werden. Ferner ist eine gute Wärmeisolation hilfreich.

Nachfolgend wird die Funktionsweise der Wärmekraftanlage und des Energieumwandlungsverfahrens nach der Erfindung betrachtet.

In einer Wärmekraftanlage mit Kondensationsmotor nach der Erfindung, wie in Figur 9 dargestellt, wird im Dampferzeuger 25 ein Hochdruckdampf erzeugt. Für das Arbeitsmedium Luft ist das bei einer Temperatur zwischen 132-160K und einem Druck von 37-100 bar. Mit der Wärmeeintragsvorrichtung 26 des Dampferzeugers 25 wird die notwendige Wärmeenergie von der Wärmequelle 27 mit einem geeigneten Wärmeträger zugeführt. Der erzeugte Hochdruckdampf wird über die Leitung 29 in die Hochdruckräume der Zylinderköpfe 41 geführt, in welchen der Hochdruckdampf mittels des Einlassventils 57 in die Hubräume eingespeist wird. Die Hubarbeit wird vom Kolben 45 durch die Kolbenstange auf den Kreuzkopf 46 übertragen, welcher die Kraft auf den Schwinghebel 48 des Schwinghebelgetriebes überträgt. Die Kreuzköpfe 46 werden in Kulissen 47 geführt, so dass keine Radialkräfte auf den Kolben wirken. Die Kreuzköpfe 46 werden auf Rollen geführt, so dass die Reibung klein gehalten werden kann. Das Schwinghebelgetriebe, das auf der Schwinghebelwelle 49 schwingt, überträgt die Arbeit auf den Kurbeltrieb 50, mit dem über ein weiteres Getriebe ein Generator angetrieben wird. Als Getriebe eignet sich vorzugsweise ein stufenlos regulierbares Hydraulikgetriebe. Mit dem Schwinghebel 48 wird auch der Restdampfverdichter 51 angetrieben. Ebenfalls wird mit dem Schwinghebel 48 die Kolbenpumpe 54 über den Pumphebel 55 angetrieben, welcher um das Lager 56 schwingt.

Durch Entspannung des Arbeitsmediums entsteht ein Phasengemisch aus kondensiertem Anteil, d. h. einem Kondensat, und nichtkondensiertem Anteil, d. h. einem Dampfanteil. Das Maschinengehäuse 44 dient als Phasentrenngefäss, in dem z. B. mittels des Schwerkraftprinzips der kondensierte Anteil und der nicht-kondensierte Anteil getrennt werden. Der Dampfanteil wird oben am Kopf des Maschinengehäuses 44 mit dem Restdampfverdichter 51 abgesogen und verdichtet. Dabei ist zu beachten, dass lediglich 60% des entspannten Dampfes wieder verdichtet werden muss und dass die zwischenmolekulare Anziehung die Verdichtung erleichtert, wie vorher erläutert. Das heisst, dieser Einfluss ist mit dem Realgasfaktor Z zu bestimmen. Davon hängt die Überhitzungswärme und somit die Energiebilanz des Prozesses ab.

Das Einlassventil 57 wird über die Dämpferscheibe 61 der Ventilstange 60 gesteuert, wie in Figur 11 gezeigt ist. Wenn die Dämpferscheibe 61 gegen den Zylinderflansch geschoben wird, wird diese Bewegung über die Ventilstangen 60 auf die Ventilbrücke 58 übertragen und damit das Einlassventil 57 geöffnet, welches mit der Ventilbrücke 58 verschraubt ist. Das Einlassventil 57 ist zylindrisch ausgebildet und schiebt sich wie ein Kolben einige Millimeter in die Zylinderbohrung. Der Druck wird damit durch die Schliessfeder 59 begrenzt und damit können auch Druckspitzen abgefangen werden, welche am Hubanfang auftreten können. Das Einlassventil 57 wird mittels der Schliessfeder 59 wieder geschlossen.

Figur 12 zeigt den Kolben 45 mit eingebautem Auslassventil 70. Aufgrund des Betriebs im Tieftemperaturbereich ist eine Schmierung schwierig. Deshalb sind für den Kondensationsmotor berührungsfreie Kolben 45 vorgesehen. Das setzt voraus, dass die Kolben 45 relativ genau in die Zylinderbohrung passen. Bei einer Spaltbreite von 10 µm zwischen Zylinderbohrung und Kolben muss mit einer Leckrate von max. 1%, bei 20 µm mit 6% Leckrate gerechnet werden. Deshalb ist vorgesehen, die Kreuzköpfe 46 auf Rollen zu lagern, so dass keine Radialkräfte auf die Kolben 45 wirken. Damit sich die Kolben 45 wirklich berührungsfrei bewegen, ist ein Zentrierring 65 vorgesehen, welcher aus einem Werkstoff hergestellt, welcher gute Trockenlaufeigenschaften aufweist. Die Stirnseite des Kolbens 45 ist als Ventilsitz ausgebildet, auf dem der Ventilkegel des Auslassventils 70 angebracht ist. Der Ventilkegel ist über die Kolbenstange 71 mit dem Gleiter 72 verbunden, in dem der Umschaltstift 69 eingebaut ist. Mit dem Umschaltstift 69 kann das Auslassventil 70 hin und her bewegt werden. Der Gleiter 72 hat zudem die Funktion den Aufschlag des Auslassventils 70 zu dämpfen. Das Auslassventil 70 ist derart konstruiert, dass es beim Entspannungshub des einen Kolbens geschlossen ist und gleichzeitig beim gegenüberliegenden Kolben für den Ausstoss offen ist. Der Dampf kann durch das Kolbenrohr 66 und anschliessend durch die Auslassschlitze 67 in das Maschinengehäuse 44, bzw. das Phasentrenngefäss, abströmen. Gegen Ende des Entspannungshubes fährt der Umschaltstift 69 auf die Umschaltfeder 64 auf, womit das Auslassventil 70 umgeschaltet wird.

Figur 14 zeigt die Steuerung von Einlassventil 57 und Auslassventil 70 mit geöffnetem Einlassventil 57. Gegen Ende des Auslasshubes stösst der Umschaltstift 69 auf die Umschaltfeder 64 und schliesst damit das Auslassventil 70. Anschliessend fährt der Ringkolben 68 in die Ringnut 62 der Dämpferscheibe 61 ein und verdichtet den eingeschlossenen Dampf, womit der Aufschlag abgedämpft wird. Bei einem Druck von 20-30 bar wird die Schliesskraft am Einlassventil 57 überwunden und damit geöffnet. Wenn der Ringspalt zwischen Ringkolben und der Nut der Dämpferscheibe sehr klein ist, wird der Abströmwiderstand sehr gross und so kann kurzfristig ein hoher Druck erzeugt werden. Während des Füllprozess strömt die in der Ringnut 62 eingeschlossene Luft über die Entlüftungsbohrung 62 ab damit der Ringkolben 68 satt auf dem Grund der Ringnut 62 aufliegt und sich zwischen dem Einlassventil 57 und dem Kolben 52 ein definierter Abstand und somit eine definierte Füllmenge ergibt.

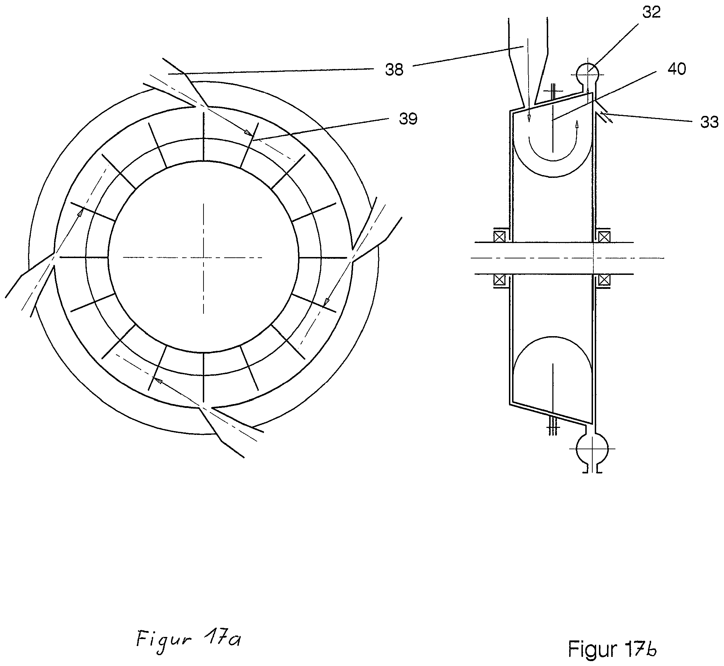

Figur 17 zeigt eine vereinfacht schematische Darstellung einer Dampfturbine, wie sie beispielsweise für die Phasentrennung des kondensierten Anteils und des nicht-kondensierten Anteils verwendet werden kann. Figur 17a zeigt eine Aufsicht mit vier Dampfdüsen 38, durch welche das verdampfte Arbeitsmedium eingeführt werden kann. Durch die Zentrifugalwirkung in der Turbine werden die beiden Anteile getrennt. Der kondensierte Anteil tritt an einem Kondensataustritt 39 aus. Figur 17b zeigt einen Längsschnitt durch die Dampfturbine und eine Dampfdüse 38. In der Turbine wird das Arbeitsmedium um eine Ebene 40 umgelenkt. Restdampf wird über eine Restdampfsaugleitung 33 abgeführt.

Für die Auslegung der Wärmekraftanlage mit dem Arbeitsfluid Luft ergeben folgende Daten: Die Verdichterleistung wird derart geregelt, dass der Druck im Maschinengehäuse 44, d. h. dem Phasentrenngefäss, ungefähr 1 bar beträgt, was einer Temperatur von 70K entspricht. Im Restdampfverdichter 51 wird der Restdampf auf 33 bar verdichtet, was eine Kondensationstemperatur von 130K ergibt. Dieser erwärmte Restdampf wird in die Primärseite des Kondensators 36 eingeführt, in dem er mit kaltem Kondensat, das durch die Sekundärseite des Kondensators 36 zugeführt wird, verflüssigt wird. Bei 130K ergibt für 0.62kg Dampf eine Kondensationswärme von 40.56kJ. Wenn 0.38 kg Kondensat von 70K auf 129K erwärmt wird, können 44.84kJ Wärme abgeführt werden. Die Rückkühlung von 60% Dampf mit 40% Kondensat ist möglich, weil die spezifische Wärme des Kondensates etwa doppelt so hoch ist, wie diejenige des überhitzten Dampfes. Somit kann der Dampfanteil intern kondensiert werden.

Das entstehende Kondensat wird dann mittels der Kolbenpumpe 54 in den Dampferzeuger 25 zurückgeführt, so dass eine Wärmerückgewinnung vorliegt.

Für die Inbetriebsetzung kann eine Elektromaschine als Motor dienen. Dabei wirkt der Restdampfverdichter als Gasverdichter und bringt das Arbeitsfluid auf Druck. Dabei wird die Anlage derart gesteuert, dass im Maschinengehäuse 44, d. h. dem Phasentrenngefäss, ein Druck von ca. 1 bar und überdruckseitig ein Druck von mindestens 40 bar vorliegt. Das ergibt im Entspannungszylinder ein Druckgefälle von 1:40 und adiabatisch betrachtet eine Abkühlung von 293K auf 73K. Damit kann der Kondensationsmotor abgekühlt und auf Betriebstemperatur gebracht werden. Wenn die Betriebstemperatur erreicht ist, setzt Kondensationsbetrieb ein und die Elektromaschine wird auf Generatorbetrieb umgesteuert. Mit dem Vorkühler kann beim Start das verdichtete Gas auf 293K vorgekühlt werden.

**Bezugszeichenliste**

| | | | |
|---|---|---|---|
| 1 | Nassdampfentspannung | 19 | Adiabate für p_{A}= 131Bar |
| 2 | kritischer Punkt | 20 | Adiabate für p_{A}= 37.2 Bar |
| 3 | nicht-kondensierter Anteil | 21 | Bewegte Wand |
| 4 | kondensierter Anteil | 22 | Mittl. |
| 5 | Restdampfverdichtung | | Molekülgeschwindigkeit vor dem Stoss |
| 6 | Rückkühlung | | |
| 7 | Restdampfkondensation | 23 | Mitt. |
| 8 | Pumpen und Erwärmen des kondensierten | | Molekülgeschwindigkeit nach dem Stoss |
| | Restdampf | 24 | Doppelte |
| 9 | Pumpen und Erwärmen des kalten Kondensatanteil | 25 | Kolbengeschwindigkeit Dampferzeuger |
| | | 26 | Wärmeeintragsvorrichtung |
| 10 | Verdampfung | | |
| 11 | Maxwell-Verteilung beim kritischen Punkt | 27 28 | Wärmequelle Pumpe |
| 12 | Bindungsenergie | 29 | Hochdruckleitung |
| 13 | Quasi kondensierte Moleküle | 30 | |
| | | 31 | |
| 14 | Nicht kondensierbare | 32 | Kondensatanschluss |
| | Moleküle | 33 | Restdampfsaugleitung |
| 15 | Verteilkurve nach Maxwell im Endzustand | 34 | Verdichter |
| | | 35 | Vorkühler |
| 16 | Kondensierbare im Endzustand | 36 | Kondensator |
| | | 37 | Kondensatpumpe |
| 17 | Nichtkondensierbare im Endzustand | 38 | Dampfdüse |
| | | 39 | Kondensataustritt |
| 18 | Realgasfaktor Z | 40 | Ebene |
| 41 | Zylinderkopf | 60 | Ventilstange |
| 42 | Zylinderkopfdichtung | 61 | Dämpferscheibe |
| 43 | Arbeitszylinder | 62 | Ringnut |
| 44 | Maschinengehäuse/ Phasentrenngefäss | 63 | Abblasbohrung |
| | | 64 | Umschaltfeder |
| 45 | Kolben | 65 | Zentrierring |
| 46 | Kreuzkopf | 66 | Kolbenrohr |
| 47 | Kulisse | 67 | Auslassschlitz |
| 48 | Schwinghebel | 68 | Ringkolben |
| 49 | Schwinghebelwelle | 69 | Umschaltstift |
| 50 | Kurbeltrieb | 70 | Auslassventil |
| 51 | Restdampfverdichter | 71 | Ventilstange |
| 52 | Kolben | 72 | Gleiter |
| 53 | Restdampfdruckleitung | 73 | Einlassventil |
| 54 | Kolbenpumpe | 74 | Auslassventil |
| 55 | Pumphebel | 75 | Restdampfaustritt |
| 56 | Pumphebellager | 76 | Kolbenstern |
| 57 | Einlassventil | 77 | Versatzung |
| 58 | Ventilbrücke | 78 | Dämpferhülse |
| 59 | Schliessfeder | 79 | Kolbenstange |

## Patentansprüche

1. Wärmekraftanlage zur Umwandlung von Energie mittels eines Arbeitsmediums, die aufweist:
- einen Dampferzeuger (25) zur Verdampfung des Arbeitsmediums bei einem ersten Druck,
- eine Dampfentspannungsvorrichtung zur Entspannung des sich im Dampfzustand befindenden Arbeitsmediums auf einen niedrigeren, zweiten Druck,
- einen Kondensator (36), welcher das aus der Dampfentspannungsvorrichtung ausgelassene Arbeitsmedium kühlt und verflüssigt, und
- eine Kondensatpumpe (37), **dadurch gekennzeichnet, dass**
- die Dampfentspannungsvorrichtung je zwei Arbeitszylinder (43) mit Einlassventilen (57) zum Einlassen des verdampften Arbeitsmediums symmetrisch gegenüberliegend und mit einem Kolben (45) verbunden umfasst, wobei das durch eine Nassdampfentspannung in der Dampfentspannungsvorrichtung entspannte Arbeitsmedium einen kondensierten Anteil und einen nicht-kondensierten Anteil aufweist,
- eine Trennvorrichtung zur Trennung des kondensierten Anteils und des nicht-kondensierten Anteils und ein Verdichter (51) zur Verdichtung (5) des nicht-kondensierten Teils des Arbeitsmediums vorgesehen sind,
- wobei der nicht-kondensierte Anteil des entspannten Arbeitsmediums zumindest teilweise durch Wärmeaustausch mit dem kondensierten Anteil in dem Kondensator (36) kondensiert.

2. Wärmekraftanlage nach Anspruch 1, wobei die Trennvorrichtung ein Gehäuse (44) umfasst, wobei in einem oberen Bereich des Gehäuses (44) der Verdichter (51), in einem unteren Bereich des Gehäuses (44) die Dampfentspannungsvorrichtung und in einem Bodenbereich unter dem unteren Bereich eine Pumpe (54) zum Abpumpen des einen kondensierten Anteils vorgesehen sind.

3. Wärmekraftanlage nach einem der vorhergehenden Ansprüche, wobei ein Schwinghebelgetriebe mit wenigstens einem Schwinghebel (48) vorgesehen ist, welches mit dem Verdichter (51) zur Verdichtung (5) des nicht-kondensierten Anteils des Arbeitsmediums und einer Pumpe (54) zum Ableiten des kondensierten Anteils (4) aus der Trennvorrichtung gekoppelt ist.

4. Wärmekraftanlage nach Anspruch 3, wobei die Arbeitszylinder (43) und Kolben (45) von dem Schwinghebelgetriebe angetrieben sind.

5. Wärmekraftanlage nach Anspruch 3 wobei ein Schwinghebel (48) des Schwinghebelgetriebes Entspannungsarbeit des Arbeitsmediums aus den Arbeitszylindern auf einen Kurbeltrieb (50) überträgt.

6. Wärmekraftanlage nach einem der vorhergehenden Ansprüche, wobei der Dampferzeuger (25) von einer Wärmequelle (27) mit Wärme gespeist wird, welche durch Verbrennung, Geothermie, Solaranlagen, Abwärme aus Kühlanlagen und/oder Wärmerückgewinnung bereitgestellt wird.

7. Wärmekraftanlage nach einem der vorhergehenden Ansprüche, wobei die Kolben (45) Auslassventile (70) aufweisen, die in den Kolben (45) eingebaut sind und durch einen Schaltstift (69) steuerbar sind.

8. Wärmekraftanlage nach einem der vorhergehenden Ansprüche, wobei der Verdichter (51) Verdichtereinlassventile (73) und Verdichterkolben (52) umfasst, wobei ein Verdichtereinlassventil (73) im Verdichterkolben (52) angeordnet ist und mittels einer Kolbenstange (79) steuerbar ist.

9. Energieumwandlungsverfahren zur Umwandlung von Wärme in mechanische oder elektrische Energie mittels eines Arbeitsmediums, das folgende Schritte aufweist:
a) Erzeugen eines Dampfzustands im Arbeitsmedium mit einem ersten Druck in einem Dampferzeuger,
b) Entspannen (1) des Dampfzustands in einer Dampfentspannungsvorrichtung auf einen niedrigeren, zweiten Druck, wobei die Dampfentspannungsvorrichtung je zwei Arbeitszylinder (43) mit Einlassventilen (57) zum Einlassen des verdampften Arbeitsmediums symmetrisch gegenüberliegend und mit einem Kolben (45) verbunden umfasst,
c) Abführen einer durch die Entspannung gewonnenen Energie,
d) das Entspannen (1) des Dampfzustands durch die Sättigungslinie des Arbeitsmediums, bevorzugt durch den kritischen Punkt (2) des Arbeitsmediums verläuft, wobei das Arbeitsmedium in einer Trennvorrichtung (44) in einen nicht-kondensierten Anteil (3) und einen kondensierten Anteil (4) getrennt wird,
e) Verdichten (5) des nicht-kondensierten Anteils (3) in einem Verdichter (51) zu einem verdichteten, nicht-kondensierten Anteil (3),
f) Kühlen (6) und Kondensieren (7) des verdichteten, nicht-kondensierten Anteils (3) zu einem verdichteten, kondensierten Anteil (3'),
g) Erwärmen (8; 9) des verdichteten, kondensierten Anteils (3') und des anfänglich kondensierten Anteils (4) und Rückführen der Anteile (3', 4) in den Dampferzeuger.

10. Verfahren nach Anspruch 9 wobei das Entspannen (1) durch eine Nassdampfentspannung erfolgt.

11. Verfahren nach einem der vorhergehenden Verfahrensansprüche wobei das Kühlen (6) und Kondensieren (7) des verdichteten, nicht-kondensierten Anteils (3) durch Wärmeaustausch mit dem kondensierten Anteil (4) erfolgt.

12. Verfahren nach einem der vorhergehenden Verfahrensansprüche wobei der zweite Druck mit einem Realgasfaktor Z für das Arbeitsmedium am kritischen Punkt bestimmt wird.

13. Verfahren nach einem der vorhergehenden Verfahrensansprüche wobei der nicht-kondensierte Anteil (3) 50% bis 60% des verdampften Arbeitsmediums beträgt.

14. Verfahren nach einem der vorhergehenden Verfahrensansprüche wobei ein erster Teil der an der Dampfentspannungsvorrichtung durch das Arbeitsmedium verrichteten Arbeit an einen Generator abgeleitet wird und ein zweiter Teil der an der Dampfentspannungsvorrichtung durch das Arbeitsmedium verrichteten Arbeit an den Verdichter abgeleitet wird, um den nicht-kondensierten Anteil zu verdichten und zu erwärmen.

## Claims

1. Thermal power plant for converting energy by means of a working medium, which has:
- a steam generator (25) for vaporizing the working medium at a first pressure,
- a steam expanding device for expanding the working medium present in the vapor state to a lower, second pressure,
- a condenser (36), which cools and liquefies the working medium let out of the steam expanding device, and
- a condensate pump (37), **characterized in that**
- the steam expanding device comprises two working cylinders (43) each with inlet valves (57) for admitting the vaporized working medium, symmetrically opposite, and connected with a piston (45), whereby the working medium expanded by a wet steam expansion in the steam expanding device has a condensed portion and a non-condensed portion,
- a separation device for separation of the condensed portion and the non-condensed portion and a compressor (51) for compression (5) of the non-condensed portion of the working medium are provided,
- whereby the non-condensed portion of the expanded working medium condenses at least partially through heat exchange with the condensed portion in the condenser (36).

2. Thermal power plant according to claim 1, whereby the separation device comprises a housing (44), whereby provided in an upper region of the housing (44) is the compressor (51), in a lower region of the housing (44) is the steam expanding device and in a bottom region under the lower region is a pump (54) for pumping out the one condensed portion.

3. Thermal power plant according to one of the preceding claims, whereby a swinging arm mechanism with at least one swinging arm (48) is provided, which mechanism is coupled to the compressor (51) for compression (5) of the non-condensed portion of the working medium and to a pump (54) for discharging the condensed portion (4) out of the separation device.

4. Thermal power plant according to claim 3, whereby the working cylinders (43) and pistons (45) are driven by the swinging arm mechanism.

5. Thermal power plant according to claim 3, whereby a swinging arm (48) of the swinging arm mechanism transmits expansion work of the working medium from the working cylinders to a crank mechanism (50).

6. Thermal power plant according to one of the preceding claims, whereby the steam generator (25) is fed by a heat source (27) with heat which is made available through combustion, geothermal energy, solar systems, waste heat from cooling systems and/or from heat recovery.

7. Thermal power plant according to one of the preceding claims, whereby the pistons (45) have outlet valves (70), which are built into the pistons (45) and are controllable by a switchover pin (69).

8. Thermal power plant according to one of the preceding claims, whereby the compressor (51) comprises compressor inlet valves (73) and compressor pistons (52), whereby a compressor inlet valve (73) is disposed in the compressor piston (52) and is controllable by means of a piston rod (79).

9. Energy conversion method for converting heat into mechanical or electrical energy by means of a working medium, which has the following steps:
a) Generating a steam state in the working medium at a first pressure in a steam generator,
b) Expanding (1) the steam state in a steam expanding device at a lower, second pressure, whereby the
steam expanding device comprises two working cylinders (43) each with inlet valves (57) for admitting the vaporized working medium, symmetrically opposite, and connected with a piston (45),
c) Discharging an energy obtained by the expansion,
d) the expansion (1) of the steam state proceeds through a saturation line of the working medium, preferably through the critical point (2) of the working medium, the working medium being separated in a separation device (44) into a non-condensed portion (3) and a condensed portion (4),
e) compression (5) of the non-condensed portion (3) in a compressor (51) into a compressed, non-condensed portion (3),
f) cooling (6) and condensing (7) of the compressed, non-condensed portion (3) into a compressed condensed portion (3'),
g) heating (8; 9) of the compressed condensed portion (3') and of the initially condensed portion (4) and return of the portions (3', 4) to the steam generator.

10. Method according to claim 9, whereby the expansion (1) takes place through a wet steam expansion.

11. Method according to one of the preceding method claims, whereby the cooling (6) and condensing (7) of the compressed, non-condensed portion (3) takes place by means of heat exchange with the condensed portion (4).

12. Method according to one of the preceding method claims, whereby the second pressure is determined with a compressibility factor Z for the working medium at the critical point.

13. Method according to one of the preceding method claims, whereby the non-condensed portion (3) amounts to 50% to 60% of the vaporized working medium.

14. Method according to one of the preceding method claims, whereby a first part of the work performed in the steam expanding device by the working medium is discharged to a generator and a second part of the work performed in the steam expanding device by the working medium is discharged to the compressor, in order to compress and heat the non-condensed portion.

## Revendications

1. Centrale thermique pour la conversion d'énergie au moyen d'un fluide de travail, qui présente :
- un générateur de vapeur (25) pour l'évaporation du fluide de travail à une première pression,
- un dispositif de détente de vapeur pour la détente du fluide de travail se trouvant à l'état de vapeur à une deuxième pression plus basse,
- un condenseur (36), qui refroidit le fluide de travail sortant du dispositif de détente de vapeur et le liquéfie et
- une pompe à condensat (37), **caractérisée en ce que**
- le dispositif de détente de vapeur comprend deux cylindres de travail (43), pourvus de soupapes d'admission (57) pour l'admission du fluide de travail évaporé, symétriquement opposés l'un à l'autre et reliés par un piston (45), le fluide de travail détendu par une détente de vapeur humide dans le dispositif de détente de vapeur présentant une proportion condensée et une proportion non condensée,
- un dispositif de séparation pour la séparation de la proportion condensée et de la proportion non condensée et un compresseur (51) pour la compression (5) de la partie non condensée du fluide de travail sont prévus,
- la proportion non condensée du fluide de travail détendu condensant au moins partiellement par échange thermique avec la proportion condensée dans le condenseur (36).

2. Centrale thermique selon la revendication 1, le dispositif de séparation comprenant un boîtier (44), le compresseur (51) étant disposé dans une zone supérieure du boîtier (44), le dispositif de détente de vapeur étant disposé dans une zone inférieure du boîtier (44) et une pompe (54), destinée à évacuer par pompage ladite une proportion condensée, étant disposée dans une zone de fond sous la zone inférieure.

3. Centrale thermique selon l'une quelconque des revendications précédentes, un mécanisme à levier oscillant présentant au moins un levier oscillant (48) étant prévu, lequel mécanisme est accouplé au compresseur (51) pour la compression (5) pour la proportion non condensée du fluide de travail et à une pompe (54) pour l'évacuation de la proportion condensée (4) hors du dispositif de séparation.

4. Centrale thermique selon la revendication 3, les cylindres de travail (43) et les pistons (45) étant entraînés par le mécanisme à levier oscillant.

5. Centrale thermique selon la revendication 3, un levier oscillant (48) du mécanisme à levier oscillant transmettant le travail de détente du fluide de travail à partir des cylindres de travail à une transmission à manivelle (50).

6. Centrale thermique selon l'une quelconque des revendications précédentes, le générateur de vapeur (25) étant alimenté en chaleur par une source thermique (27), laquelle chaleur est mise à disposition par combustion, par géothermie, par des installations solaires, par de la chaleur perdue d'installations de refroidissement et/ou par récupération thermique.

7. Centrale thermique selon l'une quelconque des revendications précédentes, les pistons (45) présentant des soupapes d'échappement (70) qui sont incorporées dans les pistons (45) et qui peuvent être commandées par une broche de commutation (69).

8. Centrale thermique selon l'une quelconque des revendications précédentes, le compresseur (51) comprenant des soupapes d'admission de compresseur (73) et des pistons de compresseur (52), une soupape d'admission de compresseur (73) étant disposée dans le piston de compresseur (52) et pouvant être commandée au moyen d'une tige de piston (79).

9. Procédé de conversion d'énergie pour la conversion de chaleur en énergie mécanique ou électrique au moyen d'un fluide de travail, présentant les étapes suivantes :
a) génération d'un état de vapeur dans le fluide de travail à une première pression dans un générateur de vapeur,
b) détente (1) de l'état de vapeur dans un dispositif de détente de vapeur à une deuxième pression plus basse, le dispositif de détente de vapeur comprenant deux cylindres de travail (43), pourvus de soupapes d'admission (57) pour l'admission du fluide de travail évaporé, symétriquement opposés l'un à l'autre et reliés par un piston (45),
c) évacuation d'une énergie obtenue par la détente,
d) la détente (1) de l'état de vapeur passe par la ligne de saturation du fluide de travail, de préférence par le point critique (2) du fluide de travail, le fluide de travail étant séparé dans un dispositif de séparation (44) en une proportion non condensée (3) et en une proportion condensée (4),
e) compression (5) de la proportion non condensée (3) dans un compresseur (51) en une proportion comprimée, non condensée (3),
f) refroidissement (6) et condensation (7) de la proportion comprimée, non condensée (3) en une proportion comprimée, condensée (3'),
g) réchauffement (8 ; 9) de la proportion comprimée, condensée (3') et de la proportion condensée (4) au départ et recyclage des proportions (3', 4) dans le générateur de vapeur.

10. Procédé selon la revendication 9, la détente (1) ayant lieu par une détente de vapeur humide.

11. Procédé selon l'une quelconque des revendications de procédé précédentes, le refroidissement (6) et la condensation (7) de la proportion comprimée, non condensée (3) ayant lieu par échange thermique avec la proportion condensée (4) .

12. Procédé selon l'une quelconque des revendications de procédé précédentes, la deuxième pression étant déterminée par un facteur de gaz réel Z pour le fluide de travail au point critique.

13. Procédé selon l'une quelconque des revendications de procédé précédentes, la proportion non condensée (3) représentant 50% à 60% du fluide de travail évaporé.

14. Procédé selon l'une quelconque des revendications de procédé précédentes, une première partie du travail effectué au niveau du dispositif de détente de vapeur par le fluide de travail étant évacuée vers un générateur et une deuxième partie du travail effectué au niveau du dispositif de détente de vapeur par le fluide de travail étant évacuée vers le compresseur pour comprimer et réchauffer la proportion non condensée.
